# EUROPÄISCHE PATENTANMELDUNG

(11) **EP 0 713 686 A1**
(43) Veröffentlichungstag der Anmeldung: **29.05.1996**
(21) Anmeldenummer: 95117319.4
(22) Anmeldetag: 03.11.1995
(51) Int. Cl.: A61C 13/265

(54) **Vorrichtung zur Befestigung abnehmbarer Zahnprothesen und Verfahren zur Realisierung der Vorrichtung**

(30) Priorität: 23.11.1994 CH 3517/94
(71) Anmelder: Cassinelli, Alberto, CH-6900 Massagno/Lugano (CH); Lupi, Mauro, CH-6923 Brusino Arsizio (CH)
(72) Erfinder: Cassinelli, Alberto, CH-6900 Massagno/Lugano (CH); Lupi, Mauro, CH-6923 Brusino Arsizio (CH)
(74) Vertreter: Gaggini, Carlo

(57) **Zusammenfassung**

Die vorliegende Erfindung betrifft eine Vorrichtung zur Befestigung abnehmbarer Zahnprothesen mit dem Zweck, einen oder mehrere fehlende Zähne zu ersetzen. Die erfindungsgemässe Befestigungsvorrichtung umfasst ein vorspringendes Element (10) mit einem kugelförmigen Kopf (11) und ein aufnehmendes Element, das aus einer hohlen zylindrischen Büchse (17) die auf einer Seite offen ist, und das eingegossen und mit einer Innenauskleidung (19) aus Kunststoff versehen ist, wobei das vorspringende Element (10) mit dem kugelförmigen Kopf (11) einen Befestigungsstift (12) mit einem Kragen (13) aufweist, der in einer Verlängerung (14) fortsetzt, die in eine in der Wand des gesunden Zahns (9) eingebrachten Vertiefung (15) eingeführt wird. Die Befestigung des Stiftes (12) in der Vertiefung (15) wird mittels Verklebung bewerkstelligt.

Gegenüber dem Stand der Technik ist die vorliegende Erfindung dadurch gekennzeichnet, dass der Befestigungsstift (12) zusätzlich vorgesehen ist.

Der Vorteil der vorliegenden Erfindung besteht in der Möglichkeit Befestigungen für abnehmbare Zahnprothesen mit einzelnen Zähnen oder komplexe Prothesen zu schaffen, die grosse mechanische Widerstandsfähigkeit der Befestigung aufweisen, und die von grossem ästhetischem Wert sind, und die geringe Kosten verursachen.

## Beschreibung

Die vorliegende Erfindung betrifft eine Vorrichtung zur Befestigung abnehmbarer Zahnprothesen gemäss dem Oberbegriff von Anspruch 1 und ein Arbeitsverfahren zur Realisierung der erfindungsgemässen Vorrichtung gemäss dem Oberbegriff des Anspruchs 6.

In Praxis der Befestigung der Zahnprothesen und in der entsprechenden Literatur sind eine ganze Reihe von Lösungen bekannt zur Realisierung lösbarer Befestigungen von Zahnprothesen, die einen oder mehrere fehlende Zähne ersetzen.

Den Stand der Technik auf dem Gebiet der abnehmbaren Zahnprothesen summarisch zusammenfassend kann man die heute praktizierten Lösungen in die folgenden drei Gruppen einteilen:
1. Ersatz der fehlenden Zähne mittels abnehmbarer Prothesen aus Acrylharz, die mittels Klammern verschiedener Art und aus verschiedenem Material verankert werden. In jüngerer Zeit, und in Ländern, deren zahnärztliche Technik an der Spitze steht, gelangt diese Lösung im wesentlichen nur für provisorische Eingriffe zur Anwendung.
2. Ersatz der fehlenden Zähne mittels abnehmbarer, mit Armierungen aus Leichtmetall-Legierungen mit Co-Cr versehenen Prothesen, die an den dem Patienten verbliebenen Zähnen mittels Klammern verschiedener Art verankert werden. Diese Armierung dient einerseits als Halterung für die Befestigung der künstlichen Zähne, oder andrerseits zum starren und handlichen Zusammenfügen der verschiedenen Konstruktionselemente, besonders der erwähnten Klammern.
3. Ersatz der fehlenden Zähne mittels abnehmbarer, mit Armierungen aus Leichtmetall-Legierungen mit Co-Cr versehenen Prothesen, die an den Zähnen mittels präziser Befestigungselemente verschiedener Art, gegossen oder an Goldkronen, oder häufiger an Gold-Keramik-Kronen angeschweisst, welche wegen der Art ihrer Ausführung und Befestigung Abtragungen an zwei oder mehr Zähnen erforderlich machen.

Die Nachteile der genannten bekannten Lösungen sind verschiedener Art, können jedoch in folgender Weise gruppiert werden:
a) Die Verwendung von Klammern, wie in den erwähnten Lösungen 1 und 2 beschrieben, ist für den Prothesenträger unangenehm in bezug auf die Aesthetik, und im übrigen stellt sie häufig Probleme, wenn eine sichere Verankerung der Prothese an den verbliebenen Zähnen geschaffen werden soll. Ueberdies kann sie eine Abnützung des Zahnschmelzes hervorrufen.
b) Die Ausführung der Lösungen gemäss dem genannten Punkt 3 mit der Notwendigkeit, für die Befestigung zwei oder mehr Kronen einzubauen, ist sehr kostspielig.

Unter dem Gesichtspunkt der Patente sind die genannten Lösungen aus einer Vielzahl von Dokumenten bekannt, die vollständigkeitshalber wenigstens insoweit zitiert sein sollen, als sie die Lösungen betreffen, die dem Gegenstand der vorliegenden Erfindung am nächsten kommen.

Typisch für die obengenannte Gruppe 3 ist die CH-A-649209, die sicher bezüglich des ästhetischen Problems der abnehmbaren Zahnprothesen einen grossen Fortschritt dargestellt hat. In dieser Patentschrift, die eine Vorrichtung zur Befestigung von Zahnprothesen betrifft, insbesondere von Zahnprothesen mit einem freien Ende auf einer oder beiden Seiten des Gebisses, besteht die Befestigung aus einem vorspringenden Element in Form eines sphärischen Stiftes, der aus einem zylindrischen Element vorspringt und mit Nuten über den Umfang versehen ist, und der an der verbliebenen Bezahnung verankert ist in einem aufnehmenden Element, das aus einem hohlen zylindrischen Körper besteht, der auf der Prothese verankert ist, am einen Ende geschlossen ist und für die Einführung des genannten sphärischen Stiftes eine sich über die Länge erstreckende Spalte aufweist. Der sphärische Stift seinerseits wird an der verbliebenen Bezahnung mittels eines Befestigungselementes in doppelkegeliger Form eines "Diabolo" befestigt, das heisst eine in den Guss der Elemente einer fixen Prothese einbeziehbare Einfügung.

Diese Befestigungsvorrichtung, die in einer einseitigen Prothese allerdings nur auf einer Seite der Prothese ausgeführt wird, während die auf der anderen Seite die Befestigung mittels einer ästhetisch nicht befriedigenden Klammer bewerkstelligt wird, erreicht zwar das Ziel, dass die sichtbare Klammer eliminiert wird, verlangt aber einen schwerwiegenden und kostspieligen Eingriff am gesunden Befestigungszahn, denn dieser muss mit einer Krone versehen werden, in die der sphärische Stift eingegossen werden kann. Der Nachteil dieser Lösung, die sowohl bezüglich der Aesthetik als auch bezüglich der Festigkeit genügt, liegt daher - abgesehen davon, dass diese in einer einseitigen Prothese nur auf der einen Seite angewendet wird - in den hohen Kosten und in der Notwendigkeit, einen an sich gesunden Zahn mit einer Prothese zu versehen.

Eine befriedigende Lösung des ästhetischen Problems der Verankerungs-Klammern von abnehmbaren Prothesen ist sodann in der EP-A-0184472 dargestellt. Auch in dieser Lösung wird die Befestigung mittels eines vorspringenden Elementes in Form einer Kugel und eines aufnehmenden Elementes in Form einer geschlitzten Büchse bewerkstelligt, in die die Kugel des vorspringenden Elementes eindringt und sich in einer bevorzugten Ausführungsform in der geschlitzten Büchse verankert, weil der Durchmesser der Kugel etwas grösser gewählt ist als der Innendurchmesser des Hohlzylinders aus Kunststoff, der die Büchse bildet.

Das Ziel und der wesentliche Gedanke dieser Erfindung besteht also darin, dass das vorspringende Element mit einer Kugel auf der Oberfläche des Befestigungszahns mittels direkter Verklebung befestigt wird, ohne dass Klammern vorhanden sind, und ohne dass Eingriffe am gesunden Befestigungszahn notwendig werden. Zum Erreichen dieses Zieles weist das vorspringende Element mit der Kugel ein Plättchen ziemlich grosser Ausdehnung für die Verklebung auf, welche gemäss einer bevorzugten Ausgestaltung der Erfindung nach dem Abgussverfahren hergestellt wird (Maryland), damit sie sich dem Profil des Zahns perfekt anschmiegt, auf den die Platte aufgeklebt wird; in diesem Fall jedoch entfallen die wirtschaftlichen Vorteile und zum Teil auch die ästhetischen Vorteile, da eine gegossene Oberfläche des Typus Maryland zur Verklebung vorhanden ist.

Der Nachteil dieses Vorschlages in seiner ersten Form, die zwar sicher die Befriedigung aller Wünsche bezüglich Aesthetik und auch bezüglich Wirtschaftlichkeit im Bereich der modernen abnehmbaren Prothesen erlaubt, ist darin zu sehen, dass die einfache Verklebung eines Plättchens auf einer Oberfläche eines Zahnes trotz grösstmöglicher Sorgfalt, mit der eine solche Klebeoperation ausgeführt wird, das heisst, auch wenn man die beiden Klebeflächen so genau als möglich aneinander anpasst, und trotz Anwendung der raffiniertesten Klebetechniken und perfektionierter Klebstoffe, nie eine wirklich sichere Verankerung des vorspringenden Elementes auf der Oberfläche des verbliebenen Befestigungszahns sicherstellen kann. Es ergibt sich immer eine gewisse Ablösungsgefahr der Prothese mit all den damit verbundenen Nachteilen.

Die vorliegende Erfindung sucht das obengenannte Problem zu lösen, das bei der Lösung gemäss EP-A-0184472 weiterbesteht, indem eine Vorrichtung zur Befestigung von abnehmbaren Zahnprothesen vorgeschlagen wird, die alle ästhetischen Vorteile und Kostenvorteile der obengenannten Erfindung aufweist, und die im Stand ist, eine sichere Verankerung des vorspringenden Befestigungselementes sicherzustellen, dergestalt, dass jede Gefahr einer Ablösung des auf dem Befestigungszahn der verbliebenen Bezahnung aufgeklebten Elementes ausgeschlossen werden kann.

Diese Ziele werden mit der erfindungsgemässen Vorrichtung gemäss dem Oberbegriff von Anspruch 1 dank der im charakterisierenden Teil des Anspruchs 1 beschriebenen Eigenheiten erreicht.

Dank des erfindungsgemässen Befestigungsstiftes am vorspringenden Elementes, der den kugelförmigen Kopf trägt, der im übrigen gleich ausgebildet ist wie der in EP-A-0184472 beschriebene, der in einem Kragen von zylindrischem Querschnitt endet, dessen Funktion jener des Verklebungsplättchens gleicht, das in der obengenannten Patentanmeldungsschrift beschrieben ist, und dank einer zylindrische Verlängerung von im wesentlichen kreisrundem Querschnitt des Kragens auf der dem kugelförmigen Kopf entgegengesetzten Seite, die in eine auf der Seite des Zahns ausgeführte Vertiefung eingeführt wird und dort eingeklebt wird, ergibt sich eine tatsächlich viel sicherere und stärkere Verankerung des vorspringenden Elementes am Befestigungszahn In der Tat bildet ein dergestaltiger Stift, der in eine Vertiefung ragt und darin eingeklebt ist, ein bevorzugtes Verankerungselement zur Aufnahme der Scherkräfte, die auf die vertikale Verklebungsfläche des vorspringenden Elementes wirken, selbst wenn die Längenausdehnung der Verlängerung begrenzt ist, wie beispielsweise gemäss den bevorzugten Abmessungen der Ausbildung gemäss Anspruch 5, damit der Zahn nicht tiefer angebohrt werden muss als bis in seine äusserste Gewebeschicht. In der Tat zeigt die Erfahrung, dass bereits eine Länge eines derartigen Verankerungsstiftes von wenigen Zehntelsmillimetern, und insbesondere eine Tiefe der Vertiefung von rund einem Millimeter mehr als genügt, um eine absolut sichere Verankerung des vorspringenden Elementes auf der Oberfläche des Zahns sicherzustellen. Der zusätzliche leichte Eingriff an der Oberfläche des Zahns, das heisst die kleine darin horizontal eingebrachte Vertiefung, die die Unvesehrtheit des gesunden Zahns in keiner Weise beeinträchtigt, da sie nicht durch die Schicht des äusseren Gewebes hindurchreicht, ist mehr als gerechtfertigt angesichts des Vorteils, der sich über den Stand der Technik abhebt, das heisst angesichts der besseren Sicherstellung der Haltbarkeit der Verankerung, welche die neue Lösung ermöglicht.

Die bevorzugte Ausführungsform der Vorrichtung gemäss Anspruch 2, gemäss welchem die Wand des verbliebenen Befestigungszahns, gegen die die Stirnseite des Kragens angeschlagen wird, ist eine ebene Wandpartie im rechten Winkel zur zylindrischen Verlängerung des Kragens des vorspringenden Elementes, welche Ausführungsform eine weitere Verbesserung der Qualität der Befestigung erlaubt, da der Kragen auf diese Weise besser an der Zahnwand klebt.

Die Ansprüche 3 bis 5 beschreiben sodann bevorzugte Ausführungsformen der erfindungsgemässen Vorrichtung, während Anspruch 6 ein besonders vorteilhaftes Verfahren zur Realisierung der erfindungsgemässen Befestigungsvorrichtung betrifft. Gemäss dieser bevorzugten Form wird die Zahnwand gleichzeitig in solche Art angebohrt und ausgefräst, dass in einem einzigen Bearbeitungsgang am Zahn sowohl die Vertiefung zur Aufnahme der Verlängerung des Kragens als auch die Abstützfläche für den Kragen erstellt werden.

Diese Lösung bietet den Vorteil eines geringen Zeitaufwandes für den Eingriff für die Verankerung des vorspringenden Elementes auf dem gesunden Zahn des Patienten, mit offensichtlich positiven Auswirkungen sowohl wirtschaftlicher als gesundheitlicher Natur. Die beiden letzten Ansprüche 7 und 8 betreffen weitere Verbesserungen des erfindungsgemässen Verfahrens gemäss Anspruch 6, welche den Arbeitsablauf für den Zahnarzt beim Einbringen des vorspringenden Elementes der erfindungsgemässen Vorrichtung zur Verankerung im Mund des Patienten noch weiter vereinfachen.

Die Erfindung wird im folgenden anhand einiger Ausführungsbeispiele und entsprechender Abbildungen detaillierter beschrieben.

Es zeigen:
- Fig. 1: Eine perspektivische Ansicht einer Teilprothese, die sich über beide Gebisseiten erstreckt, und die an den verbliebenen Zähnen an zwei Punkten mittels eines Befestigungssystems entsprechend dem in der EP-A-0184472 beschriebenen Stand der Technik befestigt ist;
- Fig. 2: Einen Längsschnitt in einer vertikalen Ebene durch die Achse des vorspringenden Elementes eines erfindungsgemässen Befestigungssystems;
- Fig. 3: Einen Längsschnitt in einer vertikalen Ebene durch eine Ausführungsvariante der erfindungsgemässen Befestigungsvorrichtung;
- Fig. 4: Eine vereinfachte perspektivische Ansicht der in Fig. 3 dargestellten Ausführungsvariante;
- Fig. 5: Ein für die Erstellung der Bohrung in der Zahnwand zur Ausführung der erfindungsgemässen Befestigung geeigneten Fräswerkzeugs im Aufriss.

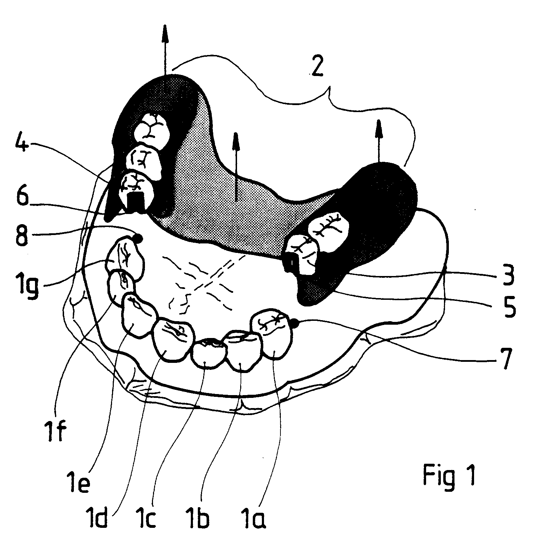

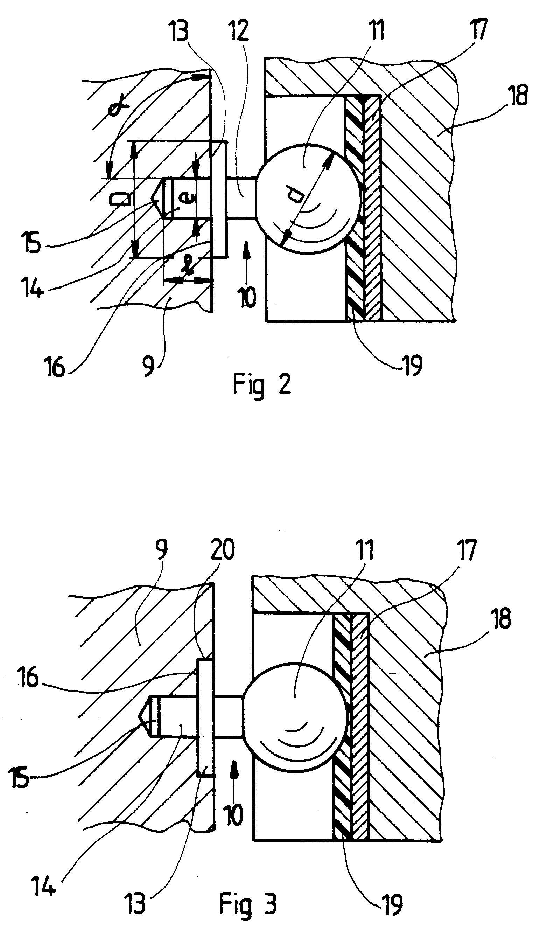

Die Fig. 1 zeigt, im Sinne eines allgemeinen Beispiels, die Ausgestaltung einer Vorrichtung zur Befestigung von Zahnprothesen gemäss dem aus der EP-A-0184472 bekannten Stand der Technik. In der Fig. 1 ist eine Reihe von 7 gesunden Zähnen 1a bis 1g dargestellt, die in diesem Beispiel im vorderen Teil des oberen Kinnbackens (Oberes Praemaxillare) sitzen. Die am weitesten distal sitzenden Zähne 1a und 1g der Zahnreihe stellen die beiden gesunden Zähne dar, an welchen auf jeder Gebisseite mittels einer Befestigungsvorrichtung bekannter Art, aber vorzugsweise gemäss der vorliegenden Erfindung, die sich über beide Gebisseiten erstreckende Teilprothese 2 befestigt wird. Diese besteht im wesentlichen, und in bekannter und hier nicht näher zu beschreibenden Art, aus einem metallischen Armierungsgerüst, in welchem künstliche Ersatzzähne befestigt sind. Die zwei im metallischen Armierungsgerüst verankerten künstlichen Zähne 3 und 4 tragen das aufnehmende Element der Befestigungsvorrichtung, das aus einer hohlen zylindrischen Büchse besteht, die zusammen mit dem Armierungsgerüst 5 und 6 gegossen wird, und die auf einer Seite offen ist, die zur Befestigung der Prothese über die beiden an den Befestigungszähnen 1a und 1g angebrachten Kugeln 7 und 8, die Teil der vorspringenden Befestigungselemente sind, gestülpt wird. Die vorspringenden Befestigungselemente sind an den Befestigungszähnen 1a und 1g mittels Verklebung befestigt, wie dies im einzelnen in den Fig. 2 und 3 der genannten EP-A-0184472 dargestellt ist, welche den Stand der Technik darstellt, der der vorliegenden Erfindung am nächsten kommt, und auf den daher bei allen Ueberlegungen allgemeiner Natur im Zusammenhang mit der vorliegenden Erfindung Bezug genommen wird.

Die vorliegende Erfindung befasst sich in der Tat nur speziell mit dem System der Verankerung des vorspringenden Elementes, das die Kugel 7 oder 8 trägt, auf dem gesunden Zahn, und versucht, gegenüber dem Stand der Technik in dieser Einzelheit, die allerdings in der Bewertung der Eigenschaften der vorgeschlagenen Befestigung eine ausschlaggebende Rolle spielt, eine Verbesserung zu schaffen. Dabei ist sogleich präzisierend festzustellen, dass die in der Fig. 1 gezeigte, sich über beide Gebisseiten erstreckende Prothese lediglich eines der Anwendungsbeispiele der vorliegenden Erfindung darstellt, die daher nicht auf eine bestimmte Art Von Prothesen beschränkt ist. Vielmehr kann die erfindungsgemässe Befestigung von Zahnprothesen, die im folgenden näher zu beschreiben ist, wie übrigens auch jene gemäss dem in der EP-A-0184472 beschriebenen Stand der Technik, ebensogut angewendet werden zur Befestigung eines einzigen künstlichen Zahns an einem gesunden Zahn nach dem Prinzip, dass ein vorspringendes Element mit einem kugelförmigen Kopf 7 oder 8 an einer Seitenwand eines Zahns 1a oder 1g der verbliebenen Bezahnung und ein aufnehmendes Element, bestehend aus einer hohlen zylindrischen Büchse 5 oder 6, die über den kugelförmigen Kopf des vorspringenden Elementes gestülpt wird, Anwendung finden.

Die Fig. 2 zeigt eine erste Ausführungsfom einer Befestigungsvorrichtung gemäss der vorliegenden Erfindung im Schnittbild. In der Fig. 2 ist vor allem die Wand des gesunden Zahns 9 dargestellt, auf welcher das vorspringende Element 10 der Befestigungsvorrichtung befestigt wird. Das Element 10 besteht aus einer Kugel 11, die funktionell genau einer der Kugeln 7 oder 8 in der Fig. 1 entspricht, und die an der Wand des Zahns 9 mittels eines Fixierungsstiftes 12, auch von kreisrundem Querschnitt, am Ende eines Kragens 13 befestigt wird. Auf der dem kugelförmigen Kopf 11 gegenüberliegenden Seite zeigt der Kragen 13 eine koaxiale, zylindrische Verlängerung 14 von im wesentlichen kreisrunden Querschnitt, die erfindungsgemäss in eine Vertiefung 15 ragt, die in der Wand des Zahns 9 eingelassen ist, und welche in der genannten Vertiefung mittels eines geeigneten Klebstoffes eingeklebt wird. Ebenfalls wird der Kragen 13 bei der Montage des vorspringenden Elementes in der Wand des Zahns 9 mit seiner der Verlängerung 14 zugewandten Stirnseite 16 an der Wand des Zahns 9 angeschlagen. Auch diese Stirnseite 16 des Kragens 13 wird an der Wand des Zahns 9 mittels geeigneten Klebstoffen angeklebt, wodurch die Stärke der Haftung des vorspringenden Elementes 10 an der Wand des Zahns 9 vergrössert wird. Dank der in die Vertiefung 15 ragenden Verlängerung, die den wesentlichen Punkt der vorliegenden Erfindung bildet, lässt sich die Widerstandsfähigkeit der Befestigung des vorspringenden Elementes 10 an der Wand des Zahns 9 beachtlich steigern. In der Tat ist augenfällig, dass die Verklebung des vorspringenden Elementes 10 in der Vertiefung 15 und an der Stirnseite 16 des Kragens 13 die Stärke der Befestigung hinsichtlich Zugbelastung, beziehungsweise hinsichtlich Kräften, die das vorspringende Element 10 aus der Wand des Zahns 9 herauszureissen suchen, erhöht, - und dies dank der viel grösseren Verklebungsfläche, und da diese mindestens teilweise durch Scherkräfte und nicht einfach auf Zug beansprucht wird - was hinsichtlich der Transversalbeanspruchungen des vorspringenden Elementes 10, das heisst die Beanspruchungen, die parallel zur Wand des Zahns 9 wirken. Diese Beanspruchungen sind die gefährlichsten und treten vor allem während des Einsetzens und während des Abnehmens der Prothese von der Befestigung auf, da bei solchen Operationen das vorspringende Element praktisch ausschliesslich auf Scherung beansprucht wird. Das sich gegenüber dem Stand der Technik abhebende erfindungsgemässe Einbeziehen der Verlängerung 14 zur Verankerung stellt eine wesentliche Verbesserung besonders der Widerstandskraft gegen die Scherkräfte, die das vorspringende Element 10 abzureissen versuchen. Es ist auch hier zu unterstreichen, dass, wie aus dem Stand der Technik bekannt ist, die Blockierung der Büchse 17, die in der abnehmbaren Prothese 18 verankert ist, dank der lokalen Verformung der Kunststoffauskleidung zu Stande kommt, die die kreisförmige Innenfläche der Büchse 17 auskleidet: es ist offensichtlich, dass zum Erreichen einer derartigen lokalen Verformung einer dünnen Kunststoffschicht immer beträchtliche Kräfte entstehen lässt, die, wenn überhaupt, von verschiedenen Faktoren, wie die gegenseitigen Abmessungen der Kugel 11 und der inneren Kunststoff-Auskleidung 19, die Härte des Materials, die Reibung, usw., beeinflusst werden können. Auf jeden Fall handelt es sich immer um grössere Kräfte, nämlich jene, die den Halt der Prothese im Mund des Trägers sicherstellen müssen. Daher ist sehr wichtig, dass solche Kräfte auf das vorspringende Element 10 ohne Gefahr des Abreissens desselben ausgeübt werden können; und dass diese Gefahr gegenüber dem Stand der Technik, gemäss welchem das vorspringende Element ohne jede mechanische Verankerung nur auf den Oberflächen des Zahns aufgeklebt ist, drastisch reduziert ist.

Natürlich wird dieser Vorteil der gegenüber dem Stand der Technik viel solideren und sichereren Verankerung dank der Vertiefung in der Wand des Zahns erreicht, die an sich gewiss einen Nachteil darstellt.

Man muss sich jedoch vergegenwärtigen, dass die Abmessungen des vorspringenden Elementes 10, wie im Anspruch 5 beansprucht, so gewählt sind, dass die in die Wand des Zahns einzubringende Tiefe der Vertiefung 15 die Dicke der äussersten Gewebeschicht des Zahns nicht überschreitet, so dass seine empfindlicheren inneren Partien hinsichtlich der Gesundheit (Vitalität) und der mechanischen Widerstandsfähigkeit des Zahns selbst in keiner Weise angegriffen werden. Es handelt sich dabei um eine Vertiefung von solchermassen gewählten Abmessungen, dass derart offensichtliche Vorteile hinsichtlich der Stärke der Verankerung der Prothese erreicht werden, dass die Nachteile des Eingriffs am Zahn reichlich kompensiert werden.

Die Fig. 3 sodann zeigt eine weiter verbesserte Ausführungsform der Erfindung, die darin besteht, dass hier auch der Kragen 13 (die gleichen Elemente in den Fig. 2 und 3 sind mit den gleichen Bezugsnummern angezeigt) im wesentlichen im Zahn 9 versenkt oder eingelassen wird.

Dies wird erreicht, indem die Wand des Zahns 9 der verbliebenen Bezahnung gegen die die Stirnseite 16 des Kragens 13 angeschlagen wird, eine kreisförmige Vertiefung 20 aufweist, deren Durchmesser etwas grösser ist als jener des Kragens 13 des Elementes 10, und deren Tiefe im wesentlichen jener des Kragens 13 entspricht. Wenn das vorspringende Element 10 in die Wand des Zahns 9 eingeführt wird, so dass sich sowohl die Verlängerung 14 als auch der Kragen 13 in den Hohlraum (die Vertiefung 15 bzw. die Ausnehmung 20) einfügen, wobei sie genau in dessen Umriss passen, worauf sie dort in bekannter Weise eingeklebt werden.

Es ist augenfällig, dass die Lösung gemäss Fig. 3 einerseits eine weitere Verbesserung der Widerstandsfähigkeit der Befestigung des vorspringenden Elementes 10 an der Wand des Zahns 9 erlaubt, und dass sie es erlaubt, einen Befestigungspunkt für das vorspringende Element 10 zu schaffen, der mit der Oberfläche des Zahns 9 perfekt bündig ist, untere Ausschaltung der zwischen dem Kragen 13 und der Oberfläche des Zahns 9 bestehenden Höhenunterschiede in der Lösung, die in der Fig. 2 gezeigt ist. Dies bildet einen Vorteil sowohl hinsichtlich der Funktionstüchtigkeit als auch der Mundhygiene, ist doch wohlbekannt, dass alle Rauhigkeiten auf den Zähnen zu beseitigen sind, die die Ansammlung von Ablagerungen irgendwelcher Art begünstigen könnten.

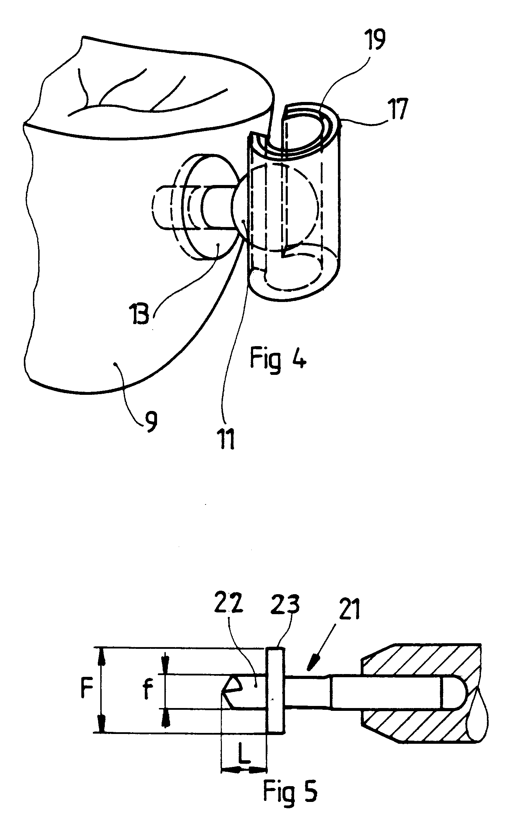

Die Fig. 4 zeigt die Elemente von Varianten der in Fig. 4 gezeigten Ausführungsform in perspektivischer Darstellung. Für bessere Klarheit der Darstellung ist hier der Körper der abnehmbaren Prothese 18 von Fig. 2 weggelassen, welche die hohle und auf einer Seite offene Büchse 17 mit ihrer Innenauskleidung 19 aus Kunststoff umschliesst.

Wie bereits oben erwähnt, kann die Erfindung angewendet werden sowohl zur Befestigung abnehmbarer Zahnprothesen, die aus einem neuen künstlichen Zahn bestehen, der zwischen zwei gesunde Zähne eingefügt wird, in welchem Fall es genügt, ein vorspringendes Element auf den Seitenwänden der gesunden Zähne zu befestigen, als auch zum Befestigen abnehmbarer Teil-Zahnprothesen, die sich über eine oder über beide Gebisseiten erstrecken, wie beispielsweise die in Fig. 1 gezeigte und zur Erklärung des allgemeinen Standes der Technik beschriebene Prothese. Es ist dabei klar, dass der einzige Unterschied gegenüber den Erläuterungen zu Fig. 1 darin besteht, dass die dort gezeigten vorspringenden Elemente 7 und 8 hier mittels einer der erfindungsgemässen Vorrichtungen entsprechend den in den Fig. 2 und 3 gezeigten Varianten an den gesunden Zähnen 1a und 1g befestigt sind.

Die zur Erläuterung des Standes der Technik anhand der in Fig. 1 angegebenen vorspringenden Elemente 6 und 7 können daher durchaus auch als solche Elemente interpretiert werden, die der vorliegenden Erfindung entsprechen, wie sie unter Bezugnahme auf Fig. 2 bis 4 beschrieben worden sind.

Was die Abmessungen der Bestandteile betrifft, die die Befestigungsvorrichtung bilden, hat die Erfahrung erlaubt, die im folgenden angegebenen Grenzwerte festzulegen (Vgl. Fig. 2):
- Der Durchmesser d des Kugelförmigen Kopfes 11 des vorspringenden Elementes 10 liegt zwischen 1.6 und 2 mm und beträgt vorzugsweise 1.8 mm;
- Der Durchmesser D des Kragens 13 liegt zwischen 2 und 3.5 mm und vorzugsweise zwischen 2.4 und 2.8 mm;
- Der Durchmesser e der zylindrischen Verlängerung 14 liegt zwischen 0.8 und 1.2 mm und beträgt vorzugsweise 0.9 mm;
- Die Länge l der Verlängerung 14, die in die in die Wand des Zahns 9 eingelassene Vertiefung 15 ragt, liegt zwischen 0.8 und 2 mm und vorzugsweise zwischen 0.8 und 1.2 mm.

Mit diesen Abmessungen können optimale Befestigungen für abnehmbare Zahnprothesen geschaffen werden, sowohl unter dem Gesichtspunkt der Widerstandsfähigkeitseigenschaften der Befestigung selbst, als auch unter jenem der optimalen Erhaltung der Widerstandsfähigkeit der noch vorhandenen gesunden Zähne.

Gemäss einer bevorzugten Ausführungsform der Erfindung ist sodann vorgesehen, dass die Wand des Zahns der verbliebenen Bezahnung, gegen die die Stirnseite 16 des Kragens 13 angeschlagen wird, eine ebene Wand ist, die zur zylindrischen Verlängerung 14 senkrecht angeordnet ist; anders ausgedrückt ist der in der Fig. 2 angezeigte Winkel α im Bereich der Verklebung des Kragens 13 an der Wand des Zahns 9 genau 90°. Der Vorteil dieser bevorzugten Variante der Erfindung ist offensichtlich: Dadurch, dass die Wand des Zahns 9 und die Stirnseite 16 des Kragens 13 dort, wo die letztere an der Wand des Zahns 9 angeklebt wird, absolut parallel ausgerichtet sind, lässt sich eine bessere Haftung der Wandflächen und somit eine widerstandsfähigere Verklebung erreichen.

Eigens um das Erreichen der genannten Voraussetzungen der senkrechten Ausrichtung zwischen der Vertiefung 15 und der Stirnseite 16 des Kragens 13 in der Wand des Zahns 9 zu erleichtern, umfasst die Erfindung ebenfalls ein bevorzugtes Verfahren der Bearbeitung, gemäss welchem die Wand des Zahns 9 gleichzeitig in solcher Weise angebohrt und ausgefräst wird, dass eine ebene und bezüglich der Achse der Vertiefung 15 und der Verlängerung 14 rechtwinklig ausgerichtete Abstützfläche für den Kragen 13 beziehungsweise für seine Stirnfläche 16 entsteht. Die Vorteile einer solchen kombinierten Operation des Bohrens und Ausfräsens sind offensichtlich und beruhen darauf, dass die Rechtwinkligkeit zwischen der Auflagefläche am Zahn 9 und der Achse der Vertiefung 25 viel leichter sichergestellt werden kann, wenn beide Operationen gleichzeitig miteinander ausgeführt werden.

Gemäss einer anderen Variante des erfindungsgemässen Arbeitsverfahrens wird das Ausfräsen der Abstützfläche mittels eines diamantbeschichteten Fräsers 21 mit einem Kragen bewerkstelligt (vgl. Fig. 5), weicher mit einem zentral angeordneten Bohrstift 22 und einer Frässcheibe 23 für das Ausfräsen der Stirnfläche auf der Wand des Zahns 9 versehen ist.

Der Anspruch 8 betrifft schlussendlich die Abmessungen der Elemente des Fräsers 21 mit einem Kragen, die natürlich auf die optimalen Abmessungen des vorspringenden Elementes 10 der erfindungsgemässen Befestigungsvorrichtung abgestimmt sind, und die vorzugsweise innerhalb der im folgenden angegebenen Grenzen liegen (vgl. Fig. 5):
- Der zentrale Stift 22 des Fräsers 21 weist einen Durchmesser f zwischen 0.8 und 1.2 mm auf und beträgt vorzugsweise 1 mm;
- Die Länge des zentralen Bohrstiftes 22 liegt zwischen 0.8 und 2 mm, und vorzugsweise zwischen 0.8 und 1.2 mm;
- Der Durchmesser F der Frässcheibe 23 liegt zwischen 2 und 3.5 mm, und vorzugsweise zwischen 2.4 und 2.8 mm.

Der Fräser ist vorzugsweise mindestens auf seinen bohrenden und fräsenden Partien diamantbeschichtet. Der Fräser kann darüber hinaus mit einem Bohrtiefenanschlag versehen sein, was auch in horizotaler Richtung grosse Präzision beim Bohren am Befestigungszahn ermöglicht.

Die Vorliegende Erfindung ist hier schematisch beschrieben und dargestellt für die Realisierung von Befestigungen von abnehmbaren Zahnprothesen, die aus einzelnen Zähnen und aus sich über beide Gebisseiten erstreckende Prothesen bestehen. Diese Begrenzung der Beschreibung ist nicht im Sinn einer Einschränkung zu verstehen, da im Rahmen der Erfindung alle Anwendungen von abnehmbaren Zahnprothesen eingeschlossen sind, die an Zähnen einer verbliebenen Restbezahnung befestigt werden.

Die Vorteile der vorliegenden Erfindung bestehen im wesentlichen in der grossen Robustheit der geschaffenen Befestigungen im Vergleich zu ähnlichen, die dem Stand der Technik entsprechen, und in den geringen Kosten im Vergleich zu den Befestigungen, die gleiche Verhältnisse bezüglich mechanischer Sicherheit, aber wesentlich schlechtere ästhetische Verhältnisse bieten.

### Liste der Elemente mit Bezugsnummern

- 1a-1g: Gesunde Zähne
- 2: Teilprothese, die sich über beide Gebisseiten erstreckt
- 3: Künstlicher Zahn
- 4: Künstlicher Zahn
- 5: Hohle Büchse
- 6: Hohle Büchse
- 7: Kugel
- 8: Kugel
- 9: Wand des gesunden Zahns
- 10: Vorspringendes Element
- 11: Kugel
- 12: Kragen
- 14: Verlängerung
- 15: Vertiefung
- 16: Stirnfläche des Kragens
- 17: Büchse
- 18: Abnehmbare Prothese
- 19: Innenauskleidung aus Kunststoff
- 20: Kreisförmige Ausnehmung
- 21: Fräser mit Kragen
- 22: Stift des Fräsers
- 23: Frässcheibe
**Fig. 2**

## Patentansprüche

1. Vorrichtung zur Befestigung abnehmbarer Zahnprothesen zum Ersatz eines oder mehrerer fehlender Zähne, die mindestens ein vorspringendes Element mit einem kugelförmigen Kopf enthält, das mittels Verklebung an einer Seitenwand eines Zahns des verbliebenen Restgebisses fest angebracht ist, und mindestens ein aufnehmendes Element bestehend aus einer hohlen, auf einer Seite offenen, zylindrischen Büchse, die mit einer elastischen Innenauskleidung aus Kunststoff versehen ist, und in der der kugelförmigen Kopf des vorspringenden Elementes aufgenommen wird, wo die lokale Verformung der elastischen Innenauskleidung der Büchse die Kraft erzeugt für die Verankerung des vorspringenden Elementes im aufnehmenden Element, das heisst die Befestigungskraft der Prothese,
dadurch gekennzeichnet, dass
das vorspringende Element (10) mit dem kugelförmigen Kopf (11) einen zylindrischen Befestigungsstift (12) aufweist, der in einem Kragen (13) von ebenfalls zylindrischem Querschnitt endet, und dass der Kragen (13) auf der dem kugelförmigen Kopf (11) gegenüberliegenden Seite eine koaxiale zylindrische Verlängerung (14) von im wesentlichen kreisförmigen Querschnitt aufweist, die zur stabilen Befestigung des vorspringenden Elementes (10) an der seitlichen Wand eines Zahns (9) der verbliebenen Restbezahnung in eine in der Wand des Zahns (9) angebrachten Vertiefung (15) ragt und dort so eingeklebt wird, dass der Kragen (13) mit seiner der Verlängerung (14) zugewendeten Stirnfläche (16) an der Wand des Zahns (9) zum Anschlag kommt und dort verklebt wird.

2. Vorrichtung gemäss Anspruch 1,
dadurch gekennzeichnet, dass
die Wand des Zahns (9) der verbliebenen Bezahnung, gegen welche die Stirnfläche (16) des Kragens (13) angeschlagen wird, eine ebene Wand ist, die gegenüber der zylindrischen Verlängerung (14) im rechten Winkel steht.

3. Vorrichtung gemäss den Ansprüchen 1 und 2,
dadurch gekennzeichnet, dass
die Wand des Zahns (9) der verbliebenen Bezahnung, gegen welche die Stirnfläche (16) des Kragens (13) eine kreisförmige Vertiefung (20) aufweist, deren Durchmesser wenig grösser ist als jener des Kragens (13) des vorspringenden Elementes (10), und deren Tiefe im wesentlichen der Dicke des Kragens (13) entspricht, in solcher Weise, dass der Kragen (13) nach dem Einkleben des vorspringenden Elementes (10) im Zahn (9) der verbliebenen Bezahnung im wesentlichen mit der Zahnoberfläche bündig ist.

4. Vorrichtung gemäss Anspruch 1,
dadurch gekennzeichnet, dass
die abnehmbare Zahnprothese und eine Teilprothese (2), die sich über beide Gebisseiten erstreckt, auf jeder ihrer Seiten ein aufnehmendes Element aufweist, das zur Befestigung der Prothese (2) an den Zähnen (1a, 1g) der verbliebenen Bezahnung dient, und das über ein entsprechendes vorspringendes Element gestülpt wird, mit dem jeder der beiden Befestigungszähne (1a, 1g) der verbliebenen Bezahnung versehen ist.

5. Vorrichtung gemäss einem der vorhergehenden Ansprüche,
dadurch gekennzeichnet, dass
der Durchmesser (d) des kugelförmigen Kopfes (11) des vorspringenden Elementes (10) zwischen 1.6 und 2 mm liegt und vorzugsweise 1.8 mm beträgt, dass der Durchmesser (D) des Kragens (13) zwischen 2 und 3.5 mm und vorzugsweise zwischen 2.4 und 2.8 mm liegt, dass der Durchmesser (e) der zylindrischen Verlängerung (14) zwischen 0.8 und 1.2 mm liegt und vorzugsweise 0.9 mm beträgt, und dass die Länge der Verlängerung (14), die in die in die Wand des Zahns (9) eingelassene Vertiefung (15) ragt, zwischen 0.8 und 2 mm und vorzugsweise zwischen 0.8 und 1.2 mm liegt.

6. Verfahren zur Realisierung der Vorrichtung zur Befestigung von Zahnprothesen gemäss einem der vorhergehenden Ansprüche 1 bis 5,
dadurch gekennzeichnet, dass
zur Realisierung der stabilen Befestigung mittels Einkleben des vorspringenden Elementes (10) an der seitlichen Wand eines Zahns (9) der verbliebenen Bezahnung die Wand des Zahns (9) gleichzeitig in solcher Weise angebohrt und ausgefräst wird, dass eine Auflagefläche für den Kragen (13) der Verlängerung (14) entsteht, die eben ist und im rechten Winkel zur Achse der Vertiefung (15) steht.

7. Verfahren gemäss Anspruch 6,
dadurch gekennzeichnet, dass
die Ausfräsung mittels eines diamantbeschichteten Fräsers (21) mit einem Kragen bewerkstelligt wird, der mit einem zentralen Bohrstift (22) und mit einer Frässcheibe (23) zum stirnseitigen Ausfräsen versehen ist.

8. Verfahren gemäss Anspruch 7,
dadurch gekennzeichnet, dass
der zentrale Bohrstift (22) des Fräsers (21) einen Durchmesser zwischen 0.8 und 1.2 mm aufweist und vorzugsweise 0.9 mm beträgt , die Länge (L) des zentralen Bohrstiftes (22) zwischen 0.8 und 2 mm und vorzugsweise zwischen 0.8 und 1.2 mm liegt, und der Durchmesser (F) der Frässcheibe (23) zwischen 2 und 3.5 mm und vorzugsweise zwischen 2.4 und 2.8 mm liegt.
